# EUROPÄISCHE PATENTSCHRIFT

(11) **EP 1 814 406 B1**
(45) Veröffentlichungstag und Bekanntmachung des Hinweises auf die Patenterteilung: **19.10.2016**
(21) Anmeldenummer: 05802313.6
(22) Anmeldetag: 28.10.2005
(51) Int. Cl.: A23L 2/60, A23L 2/39, A23L 29/30, A23L 27/00, A23L 33/20, A23F 3/30

(54) **ISOMALTULOSE ALS TRÄGER FÜR TROCKENAROMAFORMULIERUNGEN**
ISOMALTULOSE AS CARRIER FOR DRY FLAVOURING FORMULATIONS
SUPPORT SEC POUR AROME A BASE DE ISOMALTULOSE

(30) Priorität: 30.10.2004 DE 102004052800
(43) Veröffentlichungstag der Anmeldung: 08.08.2007
(73) Patentinhaber: Südzucker Aktiengesellschaft Mannheim/Ochsenfurt, 68165 Mannheim (DE)
(72) Erfinder: DÖRR, Tillmann, 67591 Hohen-Sülzen (DE); GUDERJAHN, Lutz, 67591 Offstein (DE); HAUSMANNS, Stephan, 65185 Wiesbaden (DE); KOWALCZYK, Jörg, 67304 Eisenberg/Steinborn (DE)
(74) Vertreter: Schrell, Andreas
(86) Internationale Anmeldenummer: PCT/EP2005/011559
(87) Internationale Veröffentlichungsnummer: WO 2006/048191

(56) Entgegenhaltungen:
- EP-A- 1 023 842
- EP-A- 1 421 859
- EP-A- 1 462 011
- EP-A1- 2 241 197
- EP-A2- 0 317 917
- WO-A-03/068007
- WO-A-2004/049827
- WO-A1-2004/008870
- WO-A1-2006/007993
- DE-A1- 19 943 491
- "Sports drink for supplying energy - contg. palatinose as principal saccharide", DERWENT 1989-112222, 1989, XP002258688,

## Beschreibung

Die vorliegende Erfindung betrifft Trockenaromaformulierungen enthaltend einen geträgerten Extrakt, insbesondere einen auf einem nicht-laxativen zahnschonenden Zucker als Träger geträgerten Extrakt sowie Verfahren zur deren Herstellung und Verwendungen derselben.

Granulierte Getränke, beispielsweise granulierte Fertig-Tees, enthalten als Trägerstoff sehr häufig Saccharose. Es hat sich jedoch herausgestellt, dass diese Produkte mit großen Nachteilen behaftet sind. In zahlreichen Untersuchungen wurde nachgewiesen, dass der Konsum von saccharosehaltigen Instant-Tees zu erheblichen Zahnschädigungen führen kann. So ist das bei Säuglingen und Kleinkindern auftretende Krankheitsbild des "Nursing Bottle-Syndroms" (NBS), das durch kariöse und parodontale Schädigungen des Milchgebisses, pathologische Veränderungen des Keimspektrums der Mundhöhle und chronische Entzündungszustände der Mundschleimhaut und des alveolären Kieferknochens geprägt ist, hauptsächlich auf das Dauernuckeln aus Saugerflaschen mit saccharosehaltigen Instant-Tees zurückzuführen (vgl. beispielsweise Behrendt et al., Monatsschr. Kinderheilk., 136 (1998), 30-33). Insbesondere aufgrund der nachgewiesenen Zahn- und Gebissschädigungen durch saccharosehaltige Getränke wurden saccharosefreie Instant-Tees mit Kohlenhydraten, wie Glucose oder Maltodextrinen als Trägerstoffe entwickelt. Jedoch führt auch der Konsum von Maltodextrin-haltigen Instant-Teeprodukten zu einer unkontrollierten Aufnahme von kariogenen Zuckern (Koch und Wetzel, Schweiz. Monatsschr. Zahnmed., 105 (1995), 907-912).

Auch wurden Instant-Tees auf Eiweißbasis entwickelt. Diese Instant-Tees sind zwar zuckerfrei, weisen jedoch ebenfalls eine Reihe von Nachteilen auf. So ist beispielsweise nicht abgeklärt, ob eine stete Zufuhr isolierter Eiweiße, zumal zwischen den Mahlzeiten, als gesundheitlich wünschenswert betrachtet werden kann. Ebenso ist nicht gesichert, ob durch die Zufuhr von Fremdeiweißen beispielsweise ein Allergierisiko für Babys entsteht.

Die WO 2004/008870 offenbart Isomaltulose-haltige Instant-Getränkepulver, insbesondere Instant-Tees. Die dort beschriebenen Getränkepulver stellen Mischungen der verschiedenen Bestandteile, insbesondere Isomaltulose als Süßungsmittel, mit verschiedenen Aromen dar. Einige der dort beschriebenen Getränkepulver können als zahnschonend gewertet werden. Als nachteilig erweist sich jedoch, dass bei Verwendung von Trockenaromen, also geträgerten Aromen in festem, das heisst trockenem Zustand, nach wie vor ein Gehalt an fermentierbaren Kohlenhydraten in Trockenaroma-haltige Pulver, zum Beispiel Getränkepulver, eingebracht wird.

Die im Stand der Technik bekannten Instant-Tees, insbesondere auf der Basis von Maltodextrinen und Eiweißen, sind daher hinsichtlich ihrer gesundheitlichen Unbedenklichkeit und ihrer Akariogenität noch verbesserungsfähig.

Die natürlich vorkommende reduzierende Disaccharid-Ketose Isoma-Itulose (6-O-a-D-Glucopyranosyl-Fructose; Palatinose) weist vorteilhafte akariogene Eigenschaften auf, da Isomaltulose von der menschlichen Mundflora kaum abgebaut wird. Isomaltulose wird üblicherweise aus reinen oder während der Zuckerfabrikation anfallenden Saccharose-Lösungen durch Transglucosidierung der Saccharose zu Isomaltulose unter Verwendung lebender oder toter Zellen von Protaminobacter rubrum oder daraus gewonnener Enzymextrakte hergestellt. Isomaltulose wird lediglich von den Glucosidasen der menschlichen Dünndarmwand verzögert gespalten, wobei die resultierenden Abbauprodukte Glucose und Fructose resorbiert werden. Dies resultiert, verglichen zu schnell verdaulichen Kohlenhydraten, in einem langsamen Anstieg der Blutglucose. Isomaltulose benötigt im Unterschied zu schnell verdaulichen, hochglykämischen Lebensmitteln kaum Insulin zur Verstoffwechslung. Trotz der günstigen akariogenen Eigenschafton wird Isomaltulose im Gegensatz zu anderen Zuckeraustauschstoffen wie Mannit, Sorbit und Isomalt, oder Süßstoffen wie Cyclamat kaum als alleiniges Süßungsmittel in Lebensmitteln oder Getränken eingesetzt. Dies hängt insbesondere mit dem Geschmack von Isomaltulose, insbesondere aufgrund der erheblich geringeren Süßkraft im Vergleich zu Saccharose zusammen. Die Süßkraft von 10-%igen wässrigen Isomaltulose-Lösungen beträgt nur etwa 0,4 der Süßkraft von Zucker. Dazu kommt, dass Isomaltulose Reversions- und Maillard-Produkte bilden kann.

Isomaltulose (Palatinose) wird daher hauptsächlich als Ausgangsstoff zur Herstellung von Isomalt, eines nahezu äquimolaren Gemisches der Diastereomere 6-O-a-D-Glucopyranosyl-D-sorbit (1,6-GPS) und 1-O-a-D-Glucopyranosyl-D-mannit (1,1-GPM) eingesetzt. Als Süßungsmittel wird Isomaltulose aufgrund seiner geringen Süßkraft und des daraus resultierenden Geschmacks hauptsächlich in Kombination mit anderen Zuckeraustauschstoffen und/oder Süßstoffen in Lebensmitteln und/oder Getränken eingesetzt. Teilweise wird Isomaltulose auch eingesetzt, um den unangenehmen Geschmack anderer Lebensmittel zu überdecken. Aufgrund des erst im Dünndarmbereich erfolgenden verzögerten Isomaltulose-Abbaus wird Isomaltulose auch in speziellen Lebensmitteln oder Getränken für Sportler eingesetzt, um den oxidativen Metabolismus aufrechtzuerhalten.

Es ist bekannt, dass selbst geringe Mengen an fermentierbaren Kohlenhydraten zu Zahnschädigungen führen können, insbesondere bei wiederholtem und häufigem Genuss von Getränken oder Lebensmitteln. So können bereits geringe Mengen fermentierbarer Kohlenhydrate, die beispielsweise von Säuglingen beim Nuckeln aufgenommen werden, zu erheblichen Zahnschädigungen des noch jungen Zahns führen.

Aus EP 1 462 011 A sind Getränkepulver auf Basis von Isomaltulose und Trehalose, die Aromastoffe enthalten, bekannt. Aus JP 1060360 A ist ein Getränkepulver, welches Palatinose und Fruchtsaftpulver enthält, bekannt. Aus DE 199 43 491 A1 sind Komprimate bekannt, die Isomaltulose und natürliches Zitronenaroma enthalten.

Auf der Basis dieses Standes der Technik stellt sich das technische Problem, Mittel bereitzustellen, die es ermöglichen, für den menschlichen oder tierischen Verzehr bestimmte Produkte, zum Beispiel Lebensmittel, Genussmittel, Pharmazeutika oder Getränke bereitzustellen, die bezüglich Lagerstabilität, Fließfähigkeit, Dosierfähigkeit und Aromaentfaltung verbessert sind und in erhöhtem Maße zahnschonend sind.

Die vorliegende Erfindung löst das ihr zugrunde liegende technische Problem durch die Bereitstellung einer pulver- oder granulatförmigen Trockenaromaformulierung, umfassend mindestens einen geträgerten Extrakt, wobei der Träger ein nicht-laxativer zahnschonender Zucker, nämlich Isomaltulose ist, wobei der Extrakt ein mittels Wasser, Wasser/Ethanol oder Ethanol gewonnener Auszug aus Pflanzen oder Pflanzenteilen ist, wobei der mindestens eine Extrakt mit dem Träger physikalisch assoziiert ist, das heißt in mechanisch nicht trennbarer Art und Weise mit dem Träger verbunden ist, enthaltend mindestens mindestens 40 Gew-%, bezogen auf die Gesamtmenge, Isomaltulose als Trägerstoff, höchstens 5 Gew.-%, bezogen auf die Gesamtmenge Trockensubstanz der Trockenaromaformulierung, Wasser und 5 Gew.-% bis 56 Gew.-%, bezogen auf die Gesamtmenge, Extrakt.

Die erfindungsgemäße Trockenaromaformulierung zeichnet sich durch eine besonders hohe zahnschonende Wirkung aus. Darüber hinaus weist die Isomaltulose überraschender Weise eine hohe Affinität zu Aromen auf und es zeigt sich, dass die erhaltenen Isomaltulose/Extrakt-Compounds, das heißt die vorgenannten Trockenaromenformulierungen, besonders lagerstabil sind. Sie weisen gute Pulvereigenschaften hinsichtlich ihrer Fließfähigkeit und Dosierfähigkeit auf. Darüber hinaus zeigt sich ein die aromatische Wirkung der Extrakte verstärkender Einfluss der Isomaltulose.

Im Zusammenhang mit der vorliegenden Erfindung wird unter einem Extrakt ein Auszug aus Pflanzen und/oder Pflanzenbestandteilen verstanden, der beispielsweise durch Mazeration oder Perkolation mittels Wasser, wässriger Lösung, und zwar Wasser/Ethanol, oder Ethanol und gegebenenfalls anschließendem Eindampfen des erhaltenen Auszugs hergestellt wird. Ein derartiger Extrakt kann insbesondere ein Teeextrakt, Kräuterextrakt, Fruchtextrakt, ein Geruchs- oder Geschmacksstoff oder ein Aroma, zum Beispiel ein Fruchtaroma sein. Die Erfindung betrifft in einer vorteilhaften Ausführungsform eine vorgenannte Trockenaromaformulierung, wobei diese dadurch gekennzeichnet ist, dass diese nicht nur einen Extrakt, sondern mehrere verschiedene oder viele verschiedene Extrakte in geträgerter Form, nämlich in mit Isomaltulose physikalisch assoziierter Form enthält.

Erfindungsgemäß ist vorgesehen, dass der mindestens eine Extrakt mit der Isomaltulose physikalisch assoziiert ist, wobei der Extrakt mit dem Träger physisch verbunden ist, dass eine Trennung aufgrund physikalischer Kräfte wie Sedimentieren oder Zentrifugieren nicht möglich ist.

In besonders bevorzugter Ausführungsform ist vorgesehen, dass der mindestens eine Extrakt auf oder an den Träger im Wirbelschichtverfahren, insbesondere im Wirbelschichtagglomerationsverfahren, im Co-Sprühtrocknungsverfahren, mittels Instantisierung, mittels Extrusion, mittels Gefriertrocknung oder mittels Co-Agglomeration an- beziehungsweise aufgebracht wurde. Es kann in einer Ausführungsform vorgesehen sein, die Isomaltulose vor dem physikalischen Assoziieren zu vermahlen.

Die Herstellung der erfindungsgemäßen Trockenaromaformulierung kann demgemäß zum Beispiel durch Agglomeration, Extrusion, Sprühtrocknung oder mittels Instantisierung des Trägers und des Extraktes erfolgen. In einer besonderen Ausführungsform kann vorgesehen sein, die Rohstoffe, insbesondere Isomaltulose zu vermahlen, und anschließend eine Agglomeration, vorzugsweise im Wirbelschichtverfahren, durchzuführen, wobei die vermahlene Isomaltulose zusammen mit dem Extrakt und gegebenenfalls den Zusatzstoffen agglomeriert wird. In einer weiteren Ausführungsform kann vorgesehen sein, die Rohstoffen, insbesondere die Isomaltulose zu vermahlen und unter Dampfeinwirkung mit dem Extrakt und gegebenenfalls weiteren Zusatzstoffen zu instantisieren.

Selbstverständlich ist es auch möglich, die Isomaltulose und den Extrakt einer Nassgranulation mit anschließender Trocknung und Konfektionierung, insbesondere Siebung, zu unterziehen, um erfindungsgemäße Trockenaromaformulierungen in Pulver- oder Granulat-förmiger Form zu erhalten.

Erfindungsgemäß bevorzugt werden Extrakte, welche einen besonders geringen Anteil fermentierbarer Kohlenhydrate aufweisen. Unter fermentierbaren Kohlenhydraten werden im Zusammenhang mit der vorliegenden Erfindung insbesondere Saccharose, Glucose und Fructose sowie andere Kohlenhydrate verstanden, welche von der humanen Mundflora unter Bildung organischer Säuren verstoffwechselt werden.

In einer weiteren bevorzugten Ausführungsform ist vorgesehen, dass der Gehalt an fermentierbaren Kohlenhydraten in dem mindestens einen Extrakt höchstens 30 Gew.-%, höchstens 20 Gew.-%, vorzugsweise höchstens 10 Gew.-%, höchstens 5 Gew.-%, insbesondere höchstens 0,5 Gew.-%, vorzugsweise höchstens 0,1 Gew.-% (Gew.-%-Angaben jeweils bezogen auf Gesamttrockensubstanzgehalt des Extraktes) ist.

In einer weiteren bevorzugten Ausführungsform ist vorgesehen, dass der Gehalt an fermentierbaren Kohlenhydraten in der Trockenaromaformulierung höchstens 30 Gew.-%, höchstens 20 Gew.-%, höchstens 10 Gew.-%, höchstens 5 Gew.-%, höchstens 0,5 Gew.-%, höchstens 0,1 Gew.-% (jeweils bezogen auf Gesamttrockensubstanz der Trockenaromaformulierung) ist.

Die Erfindung sieht in einer besonders bevorzugten Ausführungsform vor, die Extrakte hinsichtlich der vorgenannten unerwünschten fermentierbaren Kohlenhydrate in einem Verfahrensschritt zeitlich vor dem Assoziieren mit dem Träger abzureichern. Dies kann beispielsweise durch chromatographische Verfahren, durch selektive Hydrierung der Kohlenhydrate mittels geeigneter Enzyme, insbesondere Hydrogenasen, oder durch Einsatz entsprechender Katalysatoren, durch mikrobiellen Abbau der Kohlenhydrate, zum Beispiel durch Hefen oder andere Verfahren erreicht werden. Die so abgereicherten Extrakte werden dann zusammen mit Isomaltulose zur Herstellung der erfindungsgemäßen Trockenaromaformulierungen verwendet.

In einer besonders bevorzugten Ausführungsform sieht die vorliegende Erfindung vor, dass die erfindungsgemäße Trockenaromaformulierungen allein aus Isomaltulose und einem oder mehreren der genannten Extrakte besteht. In einer weiteren Ausführungsform kann jedoch vorgesehen sein, dass neben der Isomaltulose und dem Extrakt oder den Extrakten weitere Substanzen vorhanden sind, zum Beispiel Salze, insbesondere Salze organischer oder anorganischer Säuren. Darüber hinaus können beispielsweise natürliche oder synthetische Farbstoffe, Antioxidanzien wie Tocopherol oder Ascorbylpalnitat, Fließhilfsmittel wie Siliciumdioxid, Stabilisatoren wie Natriumsorbat oder ähnliches verwendet werden.

Die Erfindung sieht insbesondere vor, Isomaltulose oder Isomaltulose zusammen mit Trehalose als einzig und alleinig in der Trockenaromaformulierung vorkommenden Zucker, bevorzugt alleiniges körpergebendes süßendes Agens, besonders bevorzugt alleiniges süßendes Agens vorzusehen.

Im Zusammenhang mit der vorliegenden Erfindung werden unter dem Begriff "süßendes Agens" Substanzen verstanden, die Süßkraft aufweisen und zum Beispiel Lebensmitteln oder Getränken zugesetzt werden, um einen Süßegeschmack hervorzurufen. Im Zusammenhang mit der vorliegenden Erfindung werden die "süßenden Agenzien" unterteilt in "Zucker" wie Saccharose, Glucose oder Fructose, die Körper und Süßkraft geben sowie "Süßungsmittel", also Stoffe, die keine Zucker sind aber trotzdem Süßkraft aufweisen, welche wiederum untergliedert werden in "Zuckeraustauschstoffe", also süßende Agenzien, die einen Körper und einen physiologischen Brennwert zusätzlich zu einer Süßkraft aufweisen (körpergebende Süßungsmittel), und "Intensivsüßstoffe", also Stoffe, die in der Regel eine sehr hohe Süßkraft, aber keinen Körper und in der Regel keinen oder nur einen geringfügigen physiologischen Brennwert aufweisen.

In einer besonders bevorzugten Ausführungsform ist daher vorgesehen, dass die Isomaltulose gegebenenfalls zusammen mit Trehalose das einzig und alleinig vorkommende süßende Agens in der Trockenaromaformulierung ist, das heißt abgesehen von Isomaltulose und/oder Trehalose keine Zucker, keine Intensivsüßstoffe und keine Zuckeraustauschstoffe und/ oder Zuckeralkohole in der Trockenaromaformulierung vorhanden sind. Es kann aber auch vorgesehen sein, dass Isomaltulose gegebenenfalls zusammen mit Trehalose das einzig und alleinig in der Trockenaromaformulierung vorkommende körpergebende süßende Agens ist, dass heisst keine Zucker, keine Zuckeralkohole und keine Zuckeraustauschstoffe vorhanden sind. In einer weiteren Ausführungsform kann vorgesehen sein, dass die Isomaltulose und/oder Trehalose der einzig und alleinig in der Trockenaromaformulierung vorkommende Zucker ist, das heißt keine weiteren Zucker vorhanden sind.

Die vorliegende Erfindung löst das ihr zugrunde liegende technische Problem auch durch die Bereitstellung von vorgenannten Trockenaromaformulierungen, enthaltend in bevorzugter Ausführungsform mindestens 40 Gew.-%, mindestens 50 Gew.-%, mindestens 60 Gew.-%, mindestens 70 Gew.-%, mindestens 80 Gew.-%, vorzugsweise mindestens 90 Gew.-%, vorzugsweise 90 bis 95 Gew.-% bezogen auf die Gesamtmenge (Gesamttrockensubstanzgehalt der Trockenaromaformulierung) Isomaltulose als Trägerstoff, höchstens 5 Gew.-%, insbesondere 1 bis 5 Gew.-%, vorzugsweise 0,1 bis 5 Gew.-%, besonders bevorzugt 0,1 bis 1 Gew.-% bezogen auf die Gesamtmenge (Gesamttrockensubstanzgehalt der Trockenaromaformulierung) Wasser und 5 bis 56 Gew.-%, insbesondere 5 bis 40 Gew.-%, bezogen auf die Gesamtmenge (Gesamttrockensubstanzgehalt der Trockenaromaformulierung) Extrakt.

In bevorzugter Ausführungsform weist die erfindungsgemäße Trockenaromenformulierung daher vorzugsweise 40 bis 90 Gew.-%, vorzugsweise 50 bis 85 Gew.-%, vorzugsweise 55 bis 70 Gew.-% Isomaltulose auf (jeweils bezogen auf die Gesamttrockensubstanz der Trockenaromaformulierung).

In einer weiteren bevorzugten Ausführungsform können die erfindungsgemäßen Trockenaromaformulierungen zusätzlich natürliche oder synthetische Aromastoffe, vorzugsweise in einer Menge von 1 bis 30 Gew.-%, vorzugsweise 2 bis 30 Gew.-% bezogen auf die Gesamttrockensubstanz der Trockenaromaformulierung aufweisen.

Die unter Verwendung der erfindungsgemäßen Trockenaromaformulierungen hergestellten festen Produkte wie Lebensmitteln, Genussmitteln, Pharmazeutika, Pulver etc. oder trinkfertigen Getränke, zum Beispiel Tees oder Tee-ähnlichen Erzeugnisse führen in vorteilhafter Weise nicht zu den bekannten Schädigungen der Zähne und des Gebisses, da sie im Gegensatz zu den im Stand der Technik bekannten Instant-Teegetränken keine Kohlenhydrate enthalten, die von der Mundflora fermentiert werden können. Die Verwendung von Isomaltulose als Trägerstoff weist auch technologische Vorteile, insbesondere bei der Herstellung von Instant-Getränkepulver auf. Da Isomaltulose nicht hygroskopisch ist, lassen sich problemlos nichtverklumpende rieselfähige Instant-Getränkepulver in Pulver- oder Granulatform herstellen. Die Verwendung von Isomaltulose und/oder Trehalose als Trägerstoff ist darüber hinaus sehr kostengünstig, da Isomaltulose preiswert aus Saccharose hergestellt werden kann.

Erfindungsgemäß ist die Verwendung von Isomaltulose als Trägerstoff von Trockenaromaformulierungen vorgesehen, wobei die Trockenaromaformulierungen in Form eines Pulvers oder agglomerisierter Partikel oder als Granulat vorliegen. Im Zusammenhang mit der vorliegenden Erfindung wird unter einem "Träger" oder "Trägerstoff" ein chemischer Stoff verstanden, der als Unterlage und/oder Gerüst für die Stoffe dient, die die typischen geschmacks-, geruchs- und farbgebenden Eigenschaften von für den menschlichen oder tierischen Verzehr bestimmten Produkten wie Lebensmitteln, Pharmazeutika, Genussmitteln, Getränken, zum Beispiel Tees oder Tee-ähnlichen Erzeugnissen hervorrufen.

Zur Herstellung von Tee-Extrakten, das heißt Extrakten aus Pflanzenteilen des Teestrauches Camellia sinensis L.O. Kuntze aus der Familie der Teegewächse, werden beispielsweise Verfahren wie Ultrafiltrationen und umgekehrte Osmose mit anschließender Sprühtrocknung verwendet. Tee-Extrakte beziehungsweise andere pflanzliche Extrakte weisen maximale Wassergehalte von 6 % und maximale Aschegehalte von 20 % auf.

In einer bevorzugten Ausgestaltung der Erfindung umfasst die Trockenaromaformulierung einen Extrakt aus schwarzem Tee. Unter "schwarzem Tee" wird fermentierter Tee verstanden, dessen Blätter entsprechend den zur Herstellung von schwarzem Tee üblichen Verfahren wie Welken, Rollen, Fermentieren, Zerkleinern und Trocknen bearbeitet sind.

In einer weiteren bevorzugten Ausgestaltung der Erfindung ist vorgesehen, dass die erfindungsgemäße Trockenaromaformulierung einen Extrakt aus Oolongtee umfasst. Im Zusammenhang mit der vorliegenden Erfindung wird unter "Oolongtee" ein halbfermentierter Tee verstanden, dessen Blätter nach den üblichen Verfahren wie Welken und Rollen fermentiert werden, wobei die Fermentation etwa nach Ablauf der Hälfte der üblichen Zeit abgebrochen wird und eine Trocknung erfolgt.

Eine weitere bevorzugte Ausgestaltung der Erfindung betrifft eine Trockenaromaformulierung, die einen Extrakt aus grünem Tee enthält. Unter "grünem Tee" wird ein unfermentierter Tee verstanden, dessen Blätter blanchiert, gerollt und getrocknet werden und dessen natürlicher Blattfarbstoff daher weitgehend erhalten bleibt.

In einer weiteren Ausgestaltung der Erfindung ist vorgesehen, dass die erfindungsgemäßen Trockenaromaformulierung aromatisiert werden, indem ein Extrakt zur Herstellung der Trockenaromaformulierung verwendet wird, der aus einer Pflanze oder Pflanzenbestandteil, insbesondere einem Tee gewonnen wurde, dem zur Aromatisierung aromagebende Fruchtsäfte, geruch- und/oder geschmackgebende Pflanzen oder Pflanzenteile oder aromagebende Trinkbranntweine, beispielsweise Whisky, Arrak oder Rum, zugesetzt wurden.

In einer weiteren bevorzugten Ausführungsform der vorliegenden Erfindung handelt es sich bei den erfindungsgemäß eingesetzten Extrakten um Kräuterextrakte. Im Zusammenhang mit der vorliegenden Erfindung wird unter einem Kräuterextrakt ein Extrakt verstanden, der aus Pflanzen, die keine Vertreter der Familie der Teegewächse (Theaceen) sind, und/oder Pflanzenteilen davon, insbesondere Blättern, Blattknospen, Stielen, Blüten, Samen oder Wurzeln, gewonnen wird und der zum Beispiel zur Herstellung eines trinkfertigen teeähnlichen Getränkes verwendet werden kann.

Die erfindungsgemäßen Kräuterextrakte sind vorzugsweise Extrakte aus Aloe (Aloes), Anis, Baldrian (Valerianae), Baldrianwurzel, Besenginster (Sarothamni scoparii), Bilsenkraut (Hyoscyami), Bishofskraut (visnagae), Bitterklee (Trifolii fibrini), Brechwurzel (Ipecacuanhae), Brechnuss (Strychni), Brennessel, Brombeerblättern, Chinarinde (Chinae), Condurango (Condurango), eisenhaltigem Apfel (ferri pomati), Efeu (Hederae helicis), Enzian (Gentianae), Erdbeerblättern, Farn (Filicis), Faulbaum (Frangualae), Fenchel, Fichtennadel (Pini), Frauenmantel, Gänsefingerkraut, Ginseng, Grindeliakraut (Grindeliae), Hagebutte, Hefe (Faecis), Heidelbeerblättern, Hibiskusblüten, Himbeerblättern, Holunder, Hopfen, Hopfenzapfen (Strobuli lupuli), Ingwer, Johannisbeerblättern, Johanniskraut, Kalmus (Calami), Kamille (Chamomillae), kanadische Gelbwurzel (Hydrastis), Kardobenedikten (Cardui benedicti), Kastanien (Castaneae), Koloquinten (Colocynthidis), Koriander, Krauseminze, Lapacho-Pflanze, Lavendel, Lemon-Gras, Lindenblüten, Löwenzahn, Maiglöckchen (Convallariae), Majoran, Malve, Malz (Malti), Mannstreu, Mate-Pflanze, Melisse, Mistel (Visci albi), Mutterkorn (Secalis cornuti), Opium (Opii), Passionsblumen (Passiflorae), Pfefferminze, Pfingstrose, Pomeranzen (Aurantii), Ratanhia (Ratanhiae), Ringelblume Rhabarber (Rhei), Rosmarin Rotbusch Roter Sonnenhut (Echinaceae purpureae), Sagradafluid (Cascarae sagradae), Salbei (Salviae), Schafgarbe, Schlüsselblumen (Primulae), Schneeballbaum (Viburni prunifolii), Simaruba (Simarubae), Spitzwegerich, Stein- oder Honigklee (Meliloti), Tausendgüldenkraut (Centaurii), Thymian (Thymi), Tollkirschen (Belladonnae), Verbena, Weißdorn (Crataegi), Weinblätter (Vitis viniferae), Wermut (Absinthii), Ysop, Zimt und/oder Teilen davon. Erfindungsgemäß ist vorgesehen, dass der Extrakt ein Extrakt einer einzigen Pflanzenart ist. Erfindungsgemäß besteht aber auch die Möglichkeit, dass die Extrakte aus mindestens zwei Pflanzenarten stammen.

Eine weitere bevorzugte Ausführungsform der Erfindung betrifft aromatisierte Kräuter-Extrakte.

In einer bevorzugten Ausgestaltung umfasst der aromatisierte Kräuter-Extrakt neben dem entsprechenden Pflanzen-Extrakt zusätzlich natürliche oder naturidentische Geruch- oder Geschmackstoffe. In einer weiteren bevorzugten Ausgestaltung der Erfindung umfasst der aromatisierte Kräuter-Extrakt einen Extrakt, der aus Pflanzen oder Pflanzenteilen gewonnen wurde, denen vor der Extraktion zur Aromatisierung beispielsweise aromagebende Fruchtsäfte zugesetzt wurden.

In einer weiteren bevorzugten Ausführungsform der Erfindung handelt es sich bei den erfindungsgemäßen Extrakten um Früchte-Extrakte. Im Zusammenhang mit der vorliegenden Erfindung wird unter einem Früchte-Extrakt ein Pulver verstanden, das einen entsprechend herkömmlichen Verfahren gewonnenen Extrakt aus Früchten und/oder natürliche oder naturidentische Fruchtaromen enthält. In bevorzugter Ausgestaltung enthält der erfindungsgemäße Früchte-Extrakt einen Extrakt aus Früchten wie Äpfeln, Ananas, Birnen, Orangen, Grapefruit, Limonen, Mango, Passionsfrüchten, Johannisbeere, Himbeere, Heidelbeere, Kirsche, Pfirsichen, Sanddorn-Beeren, Zitronen usw.

Erfindungsgemäß ist in einer Ausführungsform der Erfindung vorgesehen, dass die Trockenaromaformulierung 0,1 Gew.-% bis 5 Gew.-% Salze organischer oder anorganischer Säuren enthalten kann. Vorzugsweise werden Salze wie Trinatriumcitrat oder ein Phosphat wie K₂HPO₄ oder KH₂PO₄ eingesetzt.

Erfindungsgemäß ist in einer bevorzugten Ausführungsform vorgesehen, dass die erfindungsgemäßen Trockenaromaformulierung Fließhilfsmittel enthalten. Unter einem "Fließhilfsmittel" oder "Fließmittel" werden sogenannte Rieselhilfen verstanden, die beispielsweise bei klebrigen oder stockenden Pulvern deren freies Fließen bewirken. Vorzugsweise handelt es sich bei dem erfindungsgemäß verwendeten Fließhilfsmittel um Siliciumdioxid.

Erfindungsgemäß ist in einer bevorzugten Ausführungsform vorgesehen, dass die Trockenaromaformulierung natürliche und/oder synthetische Farbstoffe enthalten können. Bei den natürlichen Farbstoffen kann es sich beispielsweise um Farbstoffe pflanzlicher Herkunft, wie Carotinoide, Flavonoide und Anthocyane, Farbstoffe tierischer Herkunft wie Cochenille, anorganische Pigmente wie Titandioxid, Eisenoxid-Pigmente und Eisenhydroxid-Pigmente handeln. Als natürliche Farbstoffe können ebenfalls sekundär gebildete Farbstoffe wie die Produkte der enzymatischen Bräunung, beispielsweise Polyphenole und Produkte der nicht-enzymatischen Bräunung wie Melanoidine eingesetzt werden. Erfindungsgemäß ist ferner vorgesehen, dass als natürliche. Farbstoffe Erhitzungsprodukte zum Beispiel Karamelle und Zuckercouleur eingesetzt werden können. Für die erfindungsgemäßen Trockenaromaformulierung können darüber hinaus synthetische Farbstoffe wie Azo-, Triphenylmethan-, Indigoid-, Xanthen- und Chinolin-Verbindungen eingesetzt werden. Vorzugsweise sind die erfindungsgemäß verwendeten synthetischen Farbstoffe in besonderem Maße wasserlöslich.

Erfindungsgemäß können in einer bevorzugten Ausführungsform die erfindungsgemäßen Trockenaromaformulierung zusätzlich mit natürlichen oder synthetischen Vitaminen ausgewählt aus der Gruppe bestehend aus Vitamin A, Vitamin B₁, Vitamin B₂, Vitamin B₃, Vitamin B₅, Vitamin B₆, Vitamin B₁₂, Vitamin B-Komplex, Vitamin C, Vitamin D, Vitamin E, Vitamin F und Vitamin K angereichert sein. Die erfindungsgemäßen Trockenaromaformulierungen können darüber hinaus zusätzliche Mineralstoffe und Spurenelemente enthalten. Erfindungsgemäß ist ebenfalls in einer bevorzugten Ausführungsform vorgesehen, dass die erfindungsgemäßen Trockenaromaformulierungen auch Intensivsüßstoffe wie Saccharin, Saccharin-Na, Saccharin-K, Saccharin-Ca, Natriumcyclamat, Calciumcyclamat, Acesulfam-K, Aspartam, Dulcin, Steviosid und Neohesperidindihydrochalkon enthalten.

Die vorliegende Erfindung betrifft auch mittels der vorgenannten Trockenaromaformulierungen hergestellte Produkte, und zwar Getränkepulver, bevorzugt Instant-Getränkepulver selbst. Im Zusammenhang mit der Erfindung stehen auch Verfahren zur Herstellung einer Trockenaromaformulierung, wobei der mindestens eine Extrakt mit dem Träger physikalisch assoziiert wird, indem der Träger und der mindestens eine Extrakt physisch miteinander, beispielsweise mittels eines Wirbelschichtverfahrens, insbesondere eines Wirbelschicht-Agglomerationsverfahrens, eines Extrusionsverfahrens, eines Co-Sprühtrocknungsverfahrens, eines Instantisierungsverfahrens oder eines Gefriertrocknungsverfahrens oder eines Co-Agglomerationsverfahrens in Kontakt gebracht und ein Produkt erhalten wird, welches den mindestens einen Extrakt geträgert enthält, insbesondere einen mit einem Träger physikalisch assoziierten mindestens einen Extrakt aufweist.

Die auf der Basis der erfindungsgemäßen Trockenaromaformulierung hergestellten Lebensmittel, Pharmazeutika, Genussmittel, Getränke, insbesondere Instant-Getränkepulver und hergestellten Teegetränke beziehungsweise teeähnlichen Getränke wie Kräutertee oder Früchtetee, zeichnen sich in vorteilhafter Weise dadurch aus, dass sie im Gegensatz zu den im Stand der Technik bekannten Kohlenhydrat-haltigen Instant-Teegetränken bei Konsum in der Mundhöhle nicht oder höchstens kurzzeitig zu einer pH-Wert-Absenkung in den für die Zahnschädigung bedeutsamen Bereich unterhalb von 5,7 führen, wie mittels Verfahren der Plaque-pH-Telemetrie bestimmt. Die intraorale Plaque-pH-Telemetrie (Graf und Mühlemann, J. Dent. Res., 44 (1965), 1039; Graf und Mühlemann, Helv. Odont. Acta, 10 (1966), 94) ist die einzige in vivo-Methode, die eine schnelle und zuverlässige Messung der H⁺-Ionen-Konzentration unter eine ungestörten Plaque auf der Höhe der Schmelzoberfläche der Zähne ermöglicht. Das Verfahren gestattet es daher, den pH-Wert beziehungsweise dessen Veränderung im plaquebelegtem Interdentalraum und in der Mundflüssigkeit während und nach ungestörter Einnahme von Getränken oder Nahrungsmitteln laufend zu verfolgen. Die erfindungsgemäß zur Verfügung gestellten Instant-Getränkepulver auf der Basis von Isomaltulose als Trägerstoff sind aufgrund der vorgenommenen pH-telemetrischen Bestimmungen als zahnschonend beziehungsweise im Bereich zahnschonender Produkte, also als zahnfreundlich einzuordnen.

Die Erfindung steht in Zusammenhang mit der Verwendung von Isomaltulose als insbesondere zahnschonender beziehungsweise akariogener Träger für Extrakte dieser Trockenaromaformulierung, insbesondere für die Herstellung von Trockenaromen.

Weitere vorteilhafte Ausgestaltungen der Erfindung ergeben sich aus den Unteransprüchen.

Die Erfindung wird anhand der folgenden Beispiele näher erläutert.

### Beispiele Isomaltulose-Trockenaromaformulierungen

### Beispiel 1

Es wurde aus den folgenden Bestandteilen folgende Trockenaromenformulierung hergestellt:

**Formulierung Isomaltulose-Orangen-Trockenaroma**

| | |
|---|---|
| Isomaltulose | 58,0% |
| Aromaextrakt Orange | 30,0% |
| natürlicher Aromastoff Orange | 12,0% |
| Summe | 100,0% |

### Beispiel 2

Es wurde aus den folgenden Bestandteilen folgende Trockenaromenformulierung hergestellt:

**Formulierung Isomaltulose-Citronen-Trockenaroma**

| | |
|---|---|
| Isomaltulose | 59,0 % |
| Aromaextrakt Citrone | 10,0 % |
| natürlicher Aromastoff Citrone | 30,0% |
| Citronensäure | 1,0 % |
| Summe | 100,0% |

### Beispiel 3

Es wurde aus den folgenden Bestandteilen folgende Trockenaromenformulierung hergestellt:

**Formulierung Isomaltulose-Vanille-Trockenaroma**

| | |
|---|---|
| Isomaltulose | 40,0 % |
| Gummi Arabicum | 5,5 % |
| Siliciumdioxid | 1,0 % |
| Vanille-Aromaextrakt | 53,5 % |
| Summe | 100,0% |

### Beispiel 4 (nicht erfindungsgemäß)

Es wurde aus den folgenden Bestandteilen folgende Trockenaromenformulierung hergestellt:

**Formulierung Isomaltulose-Karamell-Trockenaroma**

| | |
|---|---|
| Isomaltulose | 81,50 % |
| Aromaextrakte | 3,00 % |
| naturidentische Aromastoffe | 5,25 % |
| natürlicher Aromastoff | 10,0 % |
| Maltol | 0,25 % |
| Summe | 100,0% |

### Beispiel 5

Es wurde aus den folgenden Bestandteilen folgende Trockenaromenformulierung hergestellt:

**Formulierung Isomaltulose-Rotbusch-Trockenaroma**

| | |
|---|---|
| Isomaltulose | 52,50 % |
| Rotbusch-Extrakt | 46,50 % |
| Siliciumdioxid | 1,0 % |
| Summe | 100,0% |

### Beispiel 6

Es wurde aus den folgenden Bestandteilen folgende Trockenaromenformulierung hergestellt:

**Formulierung Isomaltulose-Fenchel-Trockenaroma**

| | |
|---|---|
| Isomaltulose | 44,40 % |
| Fenchel-Extrakt | 55,60 % |
| Summe | 100,0% |

### Beispiel 7

Es wurde aus den folgenden Bestandteilen folgende Trockenaromenformulierung hergestellt:

**Formulierung Isomaltulose-Pfefferminz-Trockenaroma**

| | |
|---|---|
| Isomaltulose | 44,40 % |
| Pfefferminz-Extrakt | 55.60 % |
| Summe | 100,0 % |

### Beispiel 8

Es wurde aus den folgenden Bestandteilen folgende Trockenaromenformulierung hergestellt:

**Formulierung Isomaltulose-Schwarztee-Trockenaroma**

| | |
|---|---|
| Isomaltulose | 85,00 % |
| Schwarztee-Extrakt | 15,00 % |
| Summe | 100,0 % |

## Patentansprüche

1. Trockenaromaformulierung in Pulver- oder Granulatform, umfassend mindestens einen geträgerten Extrakt, wobei der Träger ein zahnschonender, nicht laxativer Zucker, nämlich vermahlene Isoma-Itulose ist und wobei der Extrakt ein mittels Wasser, Wasser/Ethanol oder Ethanol gewonnener Auszug aus Pflanzen oder Pflanzenteilen ist und mit der vermahlenen Isomaltulose mechanisch nicht trennbar verbunden ist. enthaltend mindestens 40 Gew-%, bezogen auf die Gesamtmenge, Isomaltulose als Trägerstoff, höchstens 5 Gew.-%, bezogen auf die Gesamtmenge Trockensubstanz der Trockenaromaformulierung, Wasser und 5 Gew.-% bis 56 Gew.-%, bezogen auf die Gesamtmenge, Extrakt.

2. Trockenaromaformulierung nach einem der vorhergehenden Ansprüche, wobei der Gehalt fermentierbarer Kohlenhydrate im Extrakt höchstens 0,5 Gew.-%, vorzugsweise höchstens 0,1 Gew.-%, jeweils bezogen auf Gesamttrockensubstanzgehalt des Extrakts, beträgt.

3. Trockenaromaformulierung nach einem der vorhergehenden Ansprüche, wobei der Gehalt fermentierbarer Kohlenhydrate in der Trockenaromaformulierung höchstens 0,5 Gew.-%, vorzugsweise höchstens 0,1 Gew.-%, jeweils bezogen auf Gesamttrockensubstanzgehalt der Trockenaromaformulierung, beträgt.

4. Trockenaromaformulierung nach einem der vorhergehenden Ansprüche, wobei der Extrakt ein Teeextrakt, Kräuterextrakt oder Fruchtextrakt ist.

5. Trockenaromaformulierung nach einem der vorhergehenden Ansprüche, wobei der Extrakt ein Extrakt aus Pflanzenteilen des Teestrauches ist.

6. Trockenaromaformulierung nach einem der vorhergehenden Ansprüche, wobei der Extrakt ein Extrakt aus schwarzem oder grünem Tee oder Oolongtee ist.

7. Trockenaromaformulierung nach einem der vorhergehenden Ansprüche, wobei die Trockenaromaformulierung 0,1 Gew.-% bis 5 Gew.-%, bezogen auf die Gesamtmenge Trockensubstanz der Trockenaromaformulierung, Salze organischer oder anorganischer Säuren, Fließhilfsmittel, Antioxidantien und/oder Stabilisatoren enthält.

8. Trockenaromaformulierung nach Anspruch 7, wobei das Salz Trinatriumcitrat oder ein Phosphat wie K₂HPO₄ oder KH₂PO₄ ist.

9. Trockenaromaformulierung nach einem der Ansprüche 7 oder 8, wobei das Antioxidans Ascorbylpalmitat oder Alpha-Tocopherol ist.

10. Trockenaromaformulierung nach einem der Ansprüche 7 bis 9, wobei das Fließhilfsmittel Siliciumdioxid ist.

11. Trockenaromaformulierung nach einem der vorhergehenden Ansprüche, wobei die Trockenaromaformulierung mindestens einen Intensiv-Süßstoff, ausgewählt ist aus der Gruppe bestehend aus Saccharin, Saccharin-Na, Saccharin-K, Saccharin-Ca, Natriumcyclamat, Calciumcyclamat, Acesulfam-K, Aspartam, Dulcin, Steviosid und Neohesperidindihydrochalkon, enthält.

12. Getränkepulver enthaltend die Trockenaromaformulierung nach Anspruch 1.

## Claims

1. Dry aroma formulation in the form of a powder or granulate, comprising at least one carrier supported extract, whereby the carrier is a tooth-preserving, non-laxative sugar, namely grinded isomaltulose, and whereby the extract is obtained from plants or plant parts by extraction with water, water/ethanol or ethanol, and which is physically associated with the grinded isomaltulose in a mechanically inseparable manner, containing at least 40 % by weight of isomaltulose as carrier substance relative to the total amount, no more than 5 % by weight of water, relative to the total amount of dry substance of the dry aroma formulation, and 5 % by weight to 56 % by weight of extract, relative to the total amount.

2. Dry aroma formulation according to any one of the preceding claims, whereby the fermentable carbohydrate content of the extract is no more than 0.5 % by weight, preferably no more than 0.1 % by weight, each relative to the total dry substance content of the extract.

3. Dry aroma formulation according to any one of the preceding claims, whereby the fermentable carbohydrate content of the dry aroma formulation is no more than 0.5 % by weight, preferably no more than 0.1 % by weight, each relative to the total dry substance content of the dry aroma formulation.

4. Dry aroma formulation according to any one of the preceding claims, whereby the extract is a tea extract, herb extract, or fruit extract.

5. Dry aroma formulation according to any one of the preceding claims, whereby the extract is an extract of plant parts of the tea shrub.

6. Dry aroma formulation according to any one of the preceding claims, whereby the extract is an extract of black tea or green tea or Oolong tea.

7. Dry aroma formulation according to any one of the preceding claims, whereby the dry aroma formulation contains 0.1 % by weight to 5 % by weight, relative to the total quantity of dry substance of the dry aroma formulation, salts of organic or inorganic acids, flow aids, antioxidants and/or stabilizers.

8. Dry aroma formulation according to claim 7, whereby the salt is trisodiumcitrate or a phosphate such as K₂HPO₄ or KH₂PO₄.

9. Dry aroma formulation according to any one of the claims 7 or 8, whereby the antioxidant is ascorbylpalmitate or alpha-tocopherol.

10. Dry aroma formulation according to any one of the claims 7 to 9, whereby the flow aid is silicon dioxide.

11. Dry aroma formulation according to any one of the preceding claims, whereby the dry aroma formulation contains at least one intensive sweetening means selected from the group consisting of saccharine, saccharine-Na, saccharine-K, saccharine-Ca, sodium cyclamate, calcium cyclamate, acesulfame-K, aspartame, dulcin, stevioside, and neohesperidine-dihydrochalcone.

12. Beverage powder containing the dry aroma formulation according to claim 1.

## Revendications

1. Formulation d'arôme sec sous forme de poudre ou granulé, comprenant au moins un extrait supporté, dans laquelle le support est un sucre ménageant les dents et non laxatif, à savoir l'isomaltulose réduit en poudre, et dans laquelle l'extrait est un extrait obtenu à partir des plantes ou des parties de plantes au moyen de l'eau, de l'eau/éthanol ou de l'éthanol, et est lié avec l'isomaltulose réduit en poudre, de manière mécaniquement inséparable, la formulation contenant au moins 40 % en poids, par rapport à la quantité totale, de l'isomaltulose en tant que support, au plus 5 % en poids, par rapport à la quantité totale de matière sèche de la formulation d'arôme sec, de l'eau, et 5 % en poids à 56 % en poids, par rapport à la quantité totale, de l'extrait.

2. Formulation d'arôme sec selon l'une quelconque des revendications précédentes, la teneur des hydrates de carbone fermentables dans l'extrait étant au plus 0,5 % en poids, de préférence au plus 0,1 % en poids, respectivement par rapport à la teneur totale de matière sèche de l'extrait.

3. Formulation d'arôme sec selon l'une quelconque des revendications précédentes, la teneur des hydrates de carbone fermentables dans la formulation d'arôme sec étant au plus 0,5 % en poids, de préférence au plus 0,1 % en poids, respectivement par rapport à la teneur totale de matière sèche de la formulation d'arôme sec.

4. Formulation d'arôme sec selon l'une quelconque des revendications précédentes, dans laquelle l'extrait est un extrait de thé, un extrait d'herbes, ou un extrait de fruit.

5. Formulation d'arôme sec selon l'une quelconque des revendications précédentes, dans laquelle l'extrait est un extrait des parties de plante du théier.

6. Formulation d'arôme sec selon l'une quelconque des revendications précédentes, dans laquelle l'extrait est un extrait du thé noir ou vert, ou du thé oolong.

7. Formulation d'arôme sec selon l'une quelconque des revendications précédentes, dans laquelle la formulation d'arôme sec contient 0,1 % en poids à 5 % en poids, par rapport à la quantité totale de matière sèche de la formulation d'arôme sec, des sels des acides organiques ou inorganiques, des agents d'écoulement, des antioxydants et/ou des stabilisants.

8. Formulation d'arôme sec selon la revendication 7, le sel étant le citrate trisodique ou un phosphate comme K₂HPO₄ ou KH₂HPO₄.

9. Formulation d'arôme sec selon l'une quelconque des revendications 7 ou 8, l'antioxydant étant le palmitate d'ascorbyle ou l'alphatocophérol.

10. Formulation d'arôme sec selon l'une quelconque des revendications 7 à 9, l'agent d'écoulement étant le dioxyde de silicium.

11. Formulation d'arôme sec selon l'une quelconque des revendications précédentes, la formulation d'arôme sec contenant au moins un édulcorant intense choisi dans le groupe consistant en saccharine, le sel sodique de la saccharine, le sel de potassium de la saccharine, le sel de calcium de la saccharine, le cyclamate de sodium, le cyclamate de calcium, l'acésulfame K, l'aspartame, la dulcine, le stévioside et la néohespéridine dihydrochalcone.

12. Poudre de boisson, contenant la formulation d'arôme sec selon la revendication 1.
